# EUROPEAN PATENT APPLICATION

(11) **EP 1 320 111 A1**
(43) Date of publication of application: **18.06.2003**
(21) Application number: 01811208.6
(22) Date of filing: 11.12.2001
(51) Int. Cl.: H01H 1/00, H01H 1/02

(54) **Carbon nanotube contact for MEMS**

(71) Applicant: ABB RESEARCH LTD., 8050 Zürich (CH)
(72) Inventor: Fuhrmann, Henning, 8048 Zürich (CH); Carlen, Martin, 5443 Niederrohrdorf (CH); Strümpler, Ralf, 5412 Gebenstorf (CH); Fabian, Jan-Henning, 5314 Kleindöttingen (CH)
(74) Representative: ABB Patent Attorneys

(57) **Abstract**

A low voltage switch consisting of two contact elements has a contact material forming the contact surface and comprising nanotubes. The latter are arranged perpendicular to the substrate and are made of carbon, i.e. multiwalled carbon nanotubes are used preferentially. Upon closing of the switch, the nanotube layers of the two contact elements penetrate each other like two brushes, thereby forming many contact *lines* as opposed to the conventional contact *points.*

## Description

### Field of the Invention

The invention relates to switches and relays, and a contact material therefor.

### Background of the Invention

In any mechanical switch, an electric circuit is closed by approaching two conductive surfaces until they touch. At present, preferably metallic contact materials are commonly used for this purpose, for example Ag, Au, Ni, Ag-SnO2, Ag-CdO2, Ni-Au for low voltage relays, Ag-W, Cu-Cr and Cu-Cr-Bi for low voltage vacuum switches and Ni-coated Cu for low voltage switches and breakers, all of which being designed for voltages of less than 1000 V. For high-voltage switches on the other hand, Ag-plated Cu or W-Cu alloys are used.

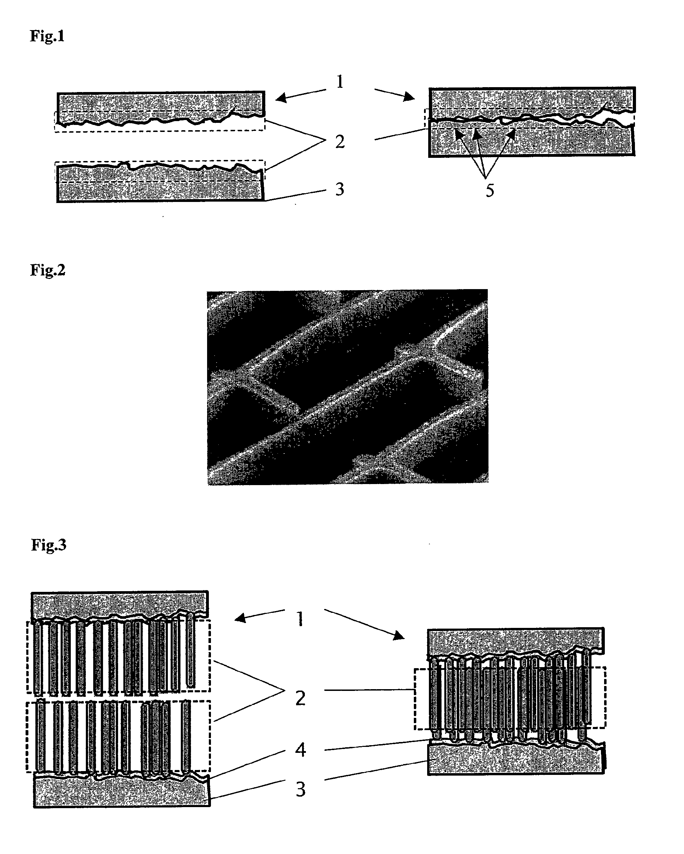

In any real system, the metal surfaces are rough on a microscopic scale. This means that when the switch is closed, most of the metal surface *does not* touch the opposite metal surface. The electrical contact is only established at a few contact points. This is illustrated in fig.1.

Since all the current has to pass through an effective contact area which consists of individual contact points and thus is much smaller than the macroscopic geometrical contact area, the contact resistance is much higher than what would be expected from the geometry and the conductivity of the device. A high contact resistance heats the device and contact welding is a common failure reason for existing relays and switches. In addition, a major problem of conventional devices is arcing that occurs while the switch is opened. When too much energy is deposited in the contact system, substantial damage such as destruction of the contact due to evaporation or heavy erosion might occur. This will lead to a significant limitation of the lifetime of the switch. Among the reported contact materials in vacuum arcs (Cd, Zn, Mg, Ag, Al, Cu, Cr, Ni, Fe, Ti, C, Mo, W), carbon has, together with Mo and Ti, the lowest erosion rate. Only compositions such as Ag-WC, Cu-Cr, or Cu-Cr-Bi may have even lower erosion rates. But for microswitches or MEMS (Micro Electro Mechanical System) made by silicon technology such two-component materials are hard to apply.

### Summary of the invention

It is an object of the invention to increase the effective contact area and/or to decrease the contact resistance of a switch. This object is achieved by a contact element for switches and a switch according to claims 1 and 5.

The proposed technique relies on the use of nanotubes as the contact material for the contact surfaces. The effective contact area is built of a multitude of contact lines along which neighboring nanotubes belonging to different contact elements touch each other. The nanotubes are preferentially oriented perpendicular to the substrate, i.e. parallel to the direction of the closing or opening movement of the contact elements.

In a preferred embodiment, the nanotubes are multiwalled carbon nanotubes (MWNT). The use of carbon increases the evaporation temperature of the contact material and, due to its intrinsic resistivity, limits the amount of power supplied through a MWNT to its tip, i.e. the starting point of an arc. Hence, higher rated powers can be switched by a corresponding switch or breaker.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:
Fig. 1 schematically shows a microscopic view of a state-of-the-art switch comprising two movable contact elements in an open (left) and closed (right) state,
Fig.2 is a scanning electron micrograph of a set of catalytically grown Multiwalled Carbon Nanotubes, taken from Christian Schönenberger and Laszlo Forró, in Physics World June 2000, pp37-41, and
Fig.3: depicts a switch according to the invention, comprising two movable contact elements in an open (left) and closed (right) state.

The reference symbols used in the drawings, and their meanings, are listed in summary form in the list of reference symbols. In principle, identical parts are provided with the same reference symbols in the figures.

### Detailed Description of Preferred Embodiments

Nanotube coatings can be used as a contact material. The concept is illustrated in fig.3. Two contact elements 1 with their contact surfaces 2 facing each other are part of a switch. On a substrate 3, a multitude of nanotubes form the contact surfaces. If required, the substrate 3 may be coated with a conducting layer 4 which helps to establish a good electrical and mechanical contact to the nanotubes and comprises e.g. aluminum. When the two contact elements 1 approach one another, the two nanotube layers penetrate each other like two brushes, thereby forming many contact *lines* along which two nanotube surfaces touch each other. This contrasts with the conventional contact *points* 5 as depicted in fig.1.

Multiwalled carbon nanotubes (MWNT) can easily be grown catalytically in a dense, forest-like arrangement e.g. on top of an aluminum layer. Ink containing the catalyst (e.g. Fe or Ni) is applied to those areas where MWNT are to be grown. The sample is then exposed to a mixture of acetylene and N₂ at about 630°C. At low concentrations of the catalyst in the ink, many small catalyst clusters are present and a dense, forest-like structure of MWNT grows perpendicular to the sample surface. An example is shown in fig.2, where for the purpose of visibility, a pattern of discrete MWNT-alleys has been grown. For contact applications according to the invention, the entire geometrical contact area is normally covered with MWNTs.

There are several advantages of this method compared to the conventional contacts:
- The contact resistance is reduced, because the contact area is increased enormously. This effect is not only true for metallic nanotubes, but also compensates the higher intrinsic resistivity of inorganic and carbon MWNT compared to the conventional metallic contacts, especially because the MWNT are short (20-30µm).
- Arcing is reduced because MWNT cannot carry large currents, so that the power that is available at the possible starting point of an arc is low. Hence in this arrangement, large arcs cannot be supplied with the energy they need. Contact welding and material migration will be much less likely.
- Chemical contact contamination (e.g. oxidation) is a known problem of standard metallic relays when switching low currents. In the proposed design, this problem is also reduced because of the excellent chemical inertness of carbon nanotubes. The high chemical and mechanical stability of MWNT also highly improves the wear resistance of the contact area.

The advantages mentioned above lead to an increased performance and lifetime of switches and relays with rated voltages of upt to 10 kV or rated currents of up to 1 kA. In particular, low-voltage switches and micro-mechanical switches incorporating a silicon substrate 3 will benefit the most.

Preliminary results of the contact properties of two silicon substrates covered with Al and MWNT indicate that MWNT can decrease the contact resistance between macroscopic (cmscale) samples by at least one order of magnitude, compared to the case without MWNT layer.

### List of designations

1 Contact element
2 Contact surface
3 Substrate
4 Coating layer
5 Contact points

## Claims

1. A contact element (1) for switches, with a substrate (3) and a contact surface (2) consisting of a contact material, **characterized in that** the contact material comprises nanotubes.

2. The contact element according to claim 1, **characterized in that** the nanotubes are oriented at least approximately perpendicular to the substrate (3).

3. The contact element according to claim 1, **characterized in that** the contact material comprises singlewalled or multiwalled carbon nanotubes.

4. The contact element according to claim 1, **characterized in that** the contact material comprises inorganic nanotubes.

5. A switch comprising two movable contact elements (1) according to one of claims 1 to 4.

6. The switch according to claim 5, **characterized in that** the switch is a micro electro mechanical switch.
